# EUROPEAN PATENT SPECIFICATION

(11) **EP 1 308 503 B1**
(45) Date of publication and mention of the grant of the patent: **19.01.2005**
(21) Application number: 02023798.8
(22) Date of filing: 25.10.2002
(51) Int. Cl.: C12H 1/16, C12G 1/02, B01D 29/00

(54) **Filter for wine-making apparatus and a wine-making apparatus equipped with the said filter**
Filter für Weinbereitungsanlagen und den Filter enthaltende Weinbereitungsanlagen
Filtre déstiné aux appareils de vinification et appareils de vinification contenant ce filtre

(30) Priority: 02.11.2001 IT PC20010033
(43) Date of publication of application: 07.05.2003
(73) Proprietor: CMB di Cassi Angelo & C. S.n.c., 29010 Pianello V.T. PC (IT)
(72) Inventor: Corrada, Valter, 29010 Pianello V.T. - PC (IT)
(74) Representative: La Ciura, Salvatore

(56) References cited:
- FR-A- 2 596 411
- FR-A- 2 612 080
- FR-A- 2 662 176

## Description

The present invention relates to a filter designed for use in association with wine-making apparatus such as fermenters and the like, to separate the marc from the must during the pumping-over and final draining of the wine.

The filter in accordance with the invention comprises a box-shaped body, the walls of which consist of a grid and means which exit from the inside of the body through the said grid to remove and detach the marc that tends to flow towards the pipe through which the must rises to the upper chamber of the wine-making unit.

The filter is designed to be used in association with wine-making apparatus such as fermenters and the like, and the invention also relates to a wine-making unit fitted with the said filter.

One stage of the wine-making process involves fermentation of the must in suitable containers, into which the must is introduced together with the marc.

The marc tends to rise to the surface, forming a "cap" which must be periodically moistened with must, firstly to prevent the marc from deteriorating on contact with the air and initiating an acetification process, and secondly to allow the dyes present in the marc to dissolve thoroughly.

The most recent types of apparatus used for fermentation comprise a container divided into two chambers, one above the other, the lower chamber being designed to receive the must and the marc, while part of the must is transferred at intervals into the upper chamber, and then spills into the lower chamber where it moistens the marc.

European patent application number 0.959.127, filed by the present applicant, describes a wine-making unit which comprises a container divided into two chambers, one above the other, a first pipe which connects the upper chamber with the lower part of the chamber below, a second pipe fitted with valve-type opening and closing means which connects the upper parts of the said two chambers, and means designed to open a passage in the partition wall between the said chambers to allow the must in the upper chamber to spill into the chamber below.

In this type of wine-making unit, the pressure created by the carbon dioxide developed in the must is usually exploited to perform the pumping-over stage, forcing the must along the pipe that leads from the bottom of the lower chamber to the upper chamber.

A filter designed to prevent the marc from being drawn into the upper chamber by the must needs to be fitted at the inlet of this pipe.

The said filters are usually constituted by a cylindrical body with a plurality of holes or slits through which the must can pass.

To remove the marc which adheres to the surface of the filter and clogs these openings, known filters contain devices which cause systems such as scrapers made of rubber, teflon and the like to travel along the walls in order to detach the marc and clear the passage.

FR-A-2.612.080 describes a filter for wine lees comprising a filter cylinder provided with a feed conduit at one of its ends and a discharge opening at its opposite end.

A series of rollers and of helical scrapers, the leading face of which points towards the discharge opening, are mounted on radial arms fitted on a central rotating shaft, and press against the inner face of the filter cylinder, engaging the marc from the inside of the filter to remove it from the walls.

However, these known systems are not entirely problem-free because the said blades or scrapers, made of various materials, tend to compress the marc which has not been detached from the filter and force it into the said holes, thereby clogging them.

In time, these known filters therefore tend to clog or otherwise lose their efficacy.

The present invention, which offers a filter for wine-making apparatus able to solve the problems described above, falls into this sector.

The said purpose is achieved by a filter constituted by a box-shaped body, the walls of which contain a plurality of slits for the passage of must, and a rotating shaft integral with a plurality of blades inside the said box-shaped body; as a result of the rotation of the shaft, the said blades exit through the said slits, mechanically removing the marc adhering to the filter walls.

The mechanical action of these cleaning devices is thus performed in the opposite direction to that of known filters, as these devices engage the marc, pushing it away from the filter walls.

This invention will now be described in detail, by way of example but not of limitation, by reference to the annexed figures wherein:
- figure 1 schematically illustrates a wine-making unit equipped with a filter in accordance with the invention
- figures 2, 3 and 4 are the side view, front view and view from above respectively of a filter in accordance with the invention, fitted inside a wine-making unit
- figures 5 and 6 illustrate another embodiment of the filter in accordance with the invention, during the various cleaning stages.

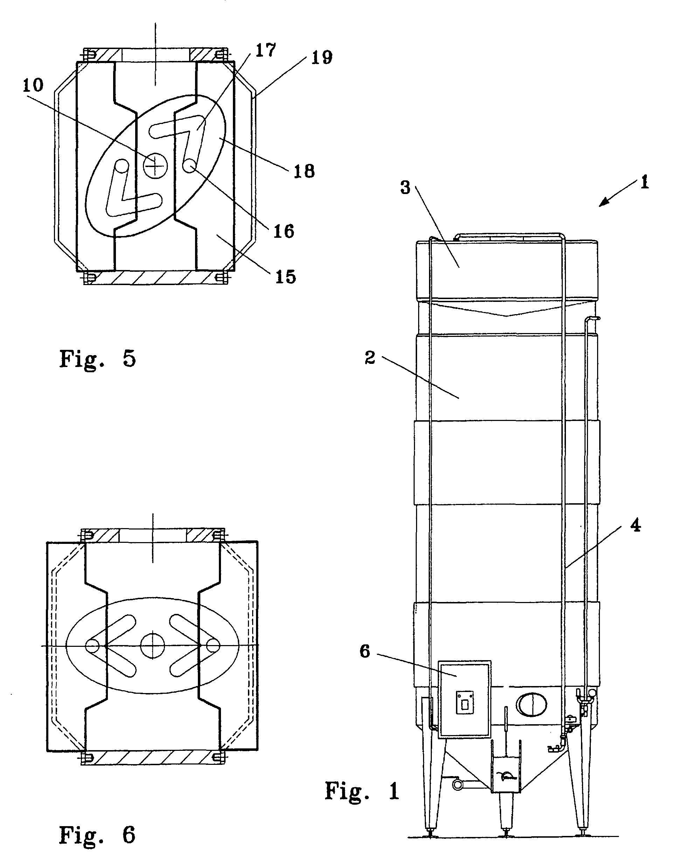

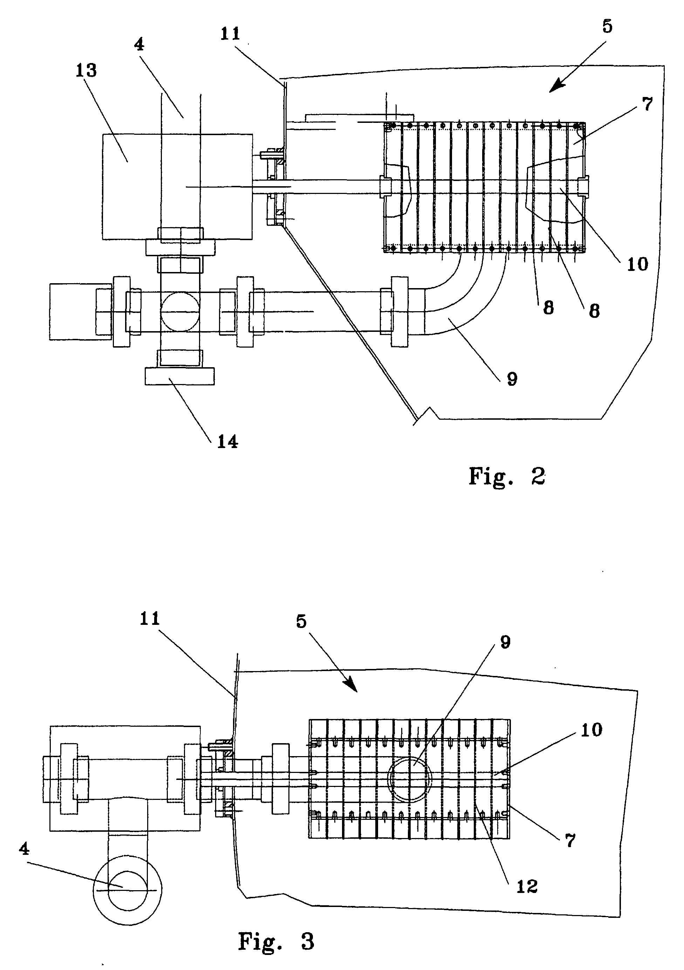

In figure 1, no. 1 indicates the wine-making apparatus, which comprises a lower chamber 2 into which the must is introduced with the marc, an upper chamber 3, separate from the preceding one, in which part of the must, due to the effect of the pressure developed by the carbon dioxide, rises through a pipe 4, at the inlet of which a filter, shown as no. 5 in figure 2, is fitted. No. 6 in figure 1 indicates an electric control board which comprises (*inter alia*) a PLC designed to control the functions of the various devices present in the unit.

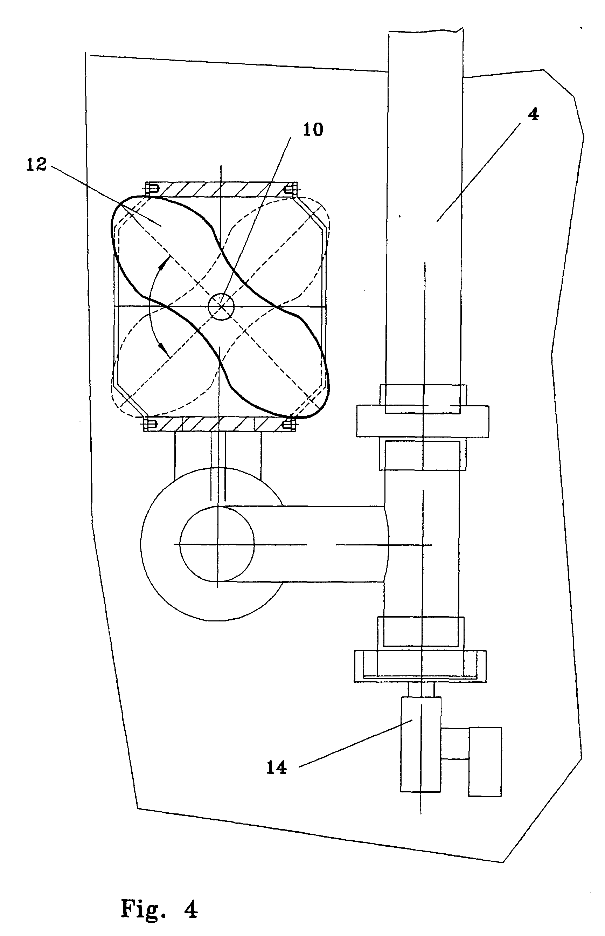

The filter (see figures 2 to 4) comprises a box-shaped body 7, the walls of which contain a plurality of slits 8, through which the must penetrates and then exits from the filter through a connector 9 which leads to pumping-over pipe 4. The latter may be fitted with a valve 14 connected to devices designed to introduce a pressurised gas to oxygenate the must.

In the embodiment illustrated in the figure, the filter has a pair of side walls which are convex or have a similar configuration.

A pair of opposite walls of box-shaped body 7 are fitted with a shaft 10 which continues to the outside of chamber 2 of the wine-making unit, passing through walls 11 thereof. A pneumatic motor 13 controls the rotation of shaft 10 around its own axis.

A plurality of arms 12 in the form of blades which exit from the box-shaped body through slits 8 are fitted to shaft 10.

The motor, controlled by the PLC, rotates the shaft with reciprocating motion, causing blades 12 to travel along the whole length of the corresponding slits and remove the marc.

Blades 12 will preferably be lance-shaped or have a curved edge so that when they are made to rotate by shaft 10, the edge of the blade always engages the parts that adhere to the filter, and removes them.

This solution is far more effective than those now known, because the blades engage the marc from the inside to the outside of the filter, thus tending to move it away from the filter rather than pressing it against the filter.

The PLC can be programmed to perform this operation automatically at pre-set intervals, thus constantly ensuring the perfect efficiency of the filter without the risk of clogging.

In accordance with another preferred embodiment of the invention illustrated in figures 5 and 6, a plurality of pairs of blades 15 slide inside box-shaped body 7; each blade is fitted with a pin 16, which said pins slide inside slots 17 cut into a series of plates 18 fitted to shaft 10.

Slots 17 are shaped like the profile of a cam which, as a result of the rotation of plates 18, acts on pins 16, causing them to slide together with blades 15, so that the said blades move from a position in which they are fully retracted inside box-shaped body 7 (figure 5) to a position (illustrated in figure 6) in which their outer edge exits from the box-shaped body, passing through slits 8 in opposite walls 19 and removing the marc that adheres to the filter.

An expert in the field could devise various modifications and variations, all of which should be deemed to fall within the ambit of this invention.

## Claims

1. A Filter for wine-making apparatus, comprising a box-shaped body (7) with a plurality of slits (8) in the walls for the passage of must, which said body is connected to a pipe (4) through which the must exits, the said filter being provided with means (12) designed to engage the marc from the inside of the said filter to remove it from the walls thereof,
**characterised in that** the said means designed to remove the marc are constituted by a plurality of blades (12, 15) subject to the action of means designed to move them in such a way that the edge of the said blades moves through the said slits to remove the marc which sticks to the filter.

2. Filter for wine-making apparatus as claimed in claim 1, **characterised in that** the said means designed to remove the marc are constituted by a plurality of arms or blades (12) fitted to a shaft (10) which rotates around its own axis, and that one edge of the said arms or blades exits from the said filter (5) through the said slits (8) as a result of the rotation of shaft (10), to remove the marc.

3. Filter for wine-making apparatus as claimed in claim 2, **characterised in that** the said arms or blades (12) are fitted to a shaft (10) which in turn is fitted to a pair of opposite walls of the filter, the said filter also being equipped with means (13) designed to rotate the said shaft by moving it with reciprocating motion.

4. Filter for wine-making apparatus as claimed in the preceding claims, **characterised in that** the said box-shaped body (7) has a polygonal cross-section, the said shaft (10) is fitted to a pair of opposite walls of the said box-shaped element, and the said shaft exits from the said filter and is connected to motor means (13).

5. Filter for wine-making apparatus as claimed in each of claims 1 to 4, **characterised in that** the said blades (12) have an edge with a curved contour so that when they are made to rotate by shaft (10), the edge of the blade always engages with and removes the parts which adhere to the filter.

6. Filter for wine-making apparatus as claimed in claim 5, **characterised in that** the said blades are lance-shaped.

7. Filter for wine-making apparatus as claimed in claim 1, **characterised in that** the said means designed to remove the marc are constituted by a plurality of pairs of blades (15) fitted with the same number of pins (16) which slide inside slots (17) cut into a set of plates (18) fitted to the shaft (10).

8. Filter for wine-making apparatus as claimed in claim 7, **characterised in that** the said slots (17) are shaped like the profile of a cam which, as a result of the rotation of plates (18), acts on the said pins (16), causing them to slide together with blades (15), so that the said blades move from a position in which they are fully retracted inside box-shaped body (7) to a position in which their outer edge exits from the box-shaped body, removing the marc that adheres to the filter.

9. Filter for wine-making apparatus as claimed in claims 2 to 8, **characterised in that** the said means designed to rotate the said shaft (10) are constituted by a pneumatic motor (13).

10. Wine-making apparatus **characterised in that** it comprises at least one filter in accordance with any of the preceding claims.

## Patentansprüche

1. Filter für Gärungsapparate mit einem schachtelförmigen Körper (7), der an den Wänden mit einer Mehrzahl von Schlitzen (8) für den Durchgang des Mosts versehen und mit einer Leitung (4) verbunden ist, aus der der Most austritt, charakterisiert durch die Tatsache, dass Mittel (12) vorgesehen sind, die geeignet sind, vom Inneren des besagten Filters auf die Treber einzuwirken, um sie von den Wänden zu entfemen, charakterisiert durch die Tatsache, dass diese zur Entfernung der Treber geeigneten Mittel aus einer Mehrzahl von Lamellen (12, 15) bestehen, die der Wirkung von Mitteln ausgesetzt sind, welche geeignet sind, sie so zu bewegen, dass sich ein Rand der besagten Lamellen durch die besagten Schlitze bewegt, um die Treber, die an dem Filter haften, zu entfernen.

2. Filter für Gärungsapparate nach Anspruch 1, charakterisiert durch die Tatsache, dass besagte Mittel, die geeignet sind, die Treber zu entfernen, aus einer Mehrzahl von Ärmchen oder Lamellen (12) bestehen, die auf einer um ihre eigene Achse rotierende Welle (10) montiert sind, wobei infolge der Rotation der Welle (10) ein Rand der besagten Ärmchen oder Lamellen aus besagtem Filter (5) durch besagte Schlitze (8) austritt, um die Treber zu entfernen.

3. Filter für Gärungsapparate nach Anspruch 2, charakterisiert durch die Tatsache, dass besagte Ärmchen oder Lamellen (12) auf einer Welle (10) montiert sind, die ihrerseits auf einem dem Filter gegenüberliegenden Wandpaar montiert ist; denn es sind Mittel (13) vorgesehen, die besagte Welle in Rotation versetzen, indem sie ihn mit einer Wechselbewegung bewegen.

4. Filter für Gärungsapparate nach den vorherigen Ansprüchen, charakterisiert durch die Tatsache, dass besagter schachtelförmiger Körper (7) einen polygonalen Abschnitt besitzt, besagte Welle (10) auf einem dem schachtelförmigen Element gegenüberliegenden Wandpaar montiert ist und besagte Welle durch besagten Filter austritt, da sie mit bewegenden Elementen (13) verbunden ist.

5. Filter für Gärungsapparate nach jedem der Ansprüche von 1 bis 5, charakterisiert durch die Tatsache, dass der Rand der besagten Lamellen (12) ein gebogenes Profil besitzt, so dass, wenn sie von der Welle (10) rotiert werden, der Rand der Lamelle stets auf die Teile einwirkt, die an dem Filter haften, so dass diese entfernt werden.

6. Filter für Gärungsapparate nach Anspruch 5, charakterisiert durch die Tatsache, dass besagte Lamellen lanzenförmig sind.

7. Filter für Gärungsapparate nach Anspruch 1, charakterisiert durch die Tatsache, dass besagte Mittel, die geeignet sind, die Trester zu entfernen, aus einer Mehrzahl von Lamellenpaaren (15) bestehen, die mit ebenso vielen Stiften (16) ausgestattet sind, welche in Schlitzlöchern (17) verlaufen, die sich in einer Reihe von Platten (18) befinden, die auf der Welle (10) montiert sind.

8. Filter für Gärungsapparate nach Anspruch 7, charakterisiert durch die Tatsache, dass besagte Schlitzlöcher (17) die Form des Profils eines Nocken aufweisen, der infolge der Rotation der Platten (18) auf besagte Stifte (16) einwirkt und sie zusammen mit den Lamellen (15) antreibt, so dass diese letzteren eine Lage annehmen, bei der sie vollkommen in das Innere des schachtelförmigen Körpers (7) eintreten und eine Lage annehmen, bei der sie mit dem Außenrand aus dem schachtelförmigen Körper herausschauen und so die Trester entfernen, die an dem Filter haften.

9. Filter für Gärungsapparate nach den Ansprüchen von 2 bis 8, charakterisiert durch die Tatsache, dass besagte Mittel, die geeignet sind, die besagte Welle (10) in Rotation zu versetzen, aus einem pneumatischen Motor (13) bestehen.

10. Gärungsapparat, charakterisiert durch die Tatsache, dass er zumindest einen Filter besitzt, nach den vorhergehenden Ansprüchen.

## Revendications

1. Filtre pour appareils de vinification comprenant un boîtier (7) dont les parois présentent plusieurs ouvertures en fente (8) pour laisser passer le moût, relié à un conduit (4) à travers lequel sort le moût, **caractérisé par le fait qu'**il est prévu des dispositifs (12) en mesure d'agir sur les marcs de l'intérieur dudit filtre de façon à les éloigner des parois de celui-ci, sachant que lesdits dispositifs chargés d'éliminer les marcs sont constitués de plusieurs lamelles (12, 15) assujetties à l'action de dispositifs en mesure de les faire bouger de façon qu'un des bords desdites lamelles bouge à travers les ouvertures en fente pour éloigner les marcs collés aux parois du filtre.

2. Filtre pour appareils de vinification selon la revendication n° 1, **caractérisé par le fait que** lesdits dispositifs chargés d'éloigner les marcs sont constitués de plusieurs petits bras ou lamelles (12) montés sur un arbre (10) qui tourne autour de son axe, sachant qu'un des bords desdits petits bras ou lamelles sort dudit filtre (5) à travers lesdites ouvertures en fente (8) sous l'effet de la rotation de l'arbre (10) de façon à éliminer les marcs.

3. Filtre pour appareils de vinification selon la revendication n° 2, **caractérisé par le fait que** lesdits petits bras ou lamelles (12) sont montés sur un arbre (10) lui-même monté sur deux parois opposées du filtre, sachant que des dispositifs (13) sont prévus pour engendrer la rotation dudit arbre selon un mouvement alterné.

4. Filtre pour appareils de vinification selon les revendications précédentes, **caractérisé par le fait que** ledit boîtier (7) présente une section polygonale, sachant que ledit arbre (10) est monté sur deux parois opposées dudit boîtier, ledit arbre sort dudit filtre et est relié à des dispositifs moteurs (13)

5. Filtre pour appareils de vinification selon une des revendications de 1 à 5, **caractérisé par le fait que** lesdites lamelles (12) présentent un bord à profil courbe, de façon que, lorsqu'elles tournent sous l'impulsion de l'arbre (10), le bord de la lamelle agisse toujours sur les parties qui adhèrent au filtre en les éloignant.

6. Filtre pour appareils de vinification selon la revendication n° 5, **caractérisé par le fait que** lesdites lamelles sont en forme de lance.

7. Filtre pour appareils de vinification selon la revendication n° 1, **caractérisé par le fait que** lesdits dispositifs chargés d'éliminer les marcs sont constitués de plusieurs couples de lamelles (15) équipées d'un nombre correspondant d'axes (16) qui coulissent dans des ouvertures (17) pratiquées sur une série de plaques (18) montées sur l'arbre (10).

8. Filtre pour appareils de vinifications selon la revendication n° 7, **caractérisé par le fait que** lesdites ouvertures (17) ont la forme du profil d'une came qui, sous l'effet de la rotation des plaques (18) agit sur lesdits axes (16) en les faisant coulisser, en même temps que les lamelles, de façon que ces dernières passent d'une position telle qu'elles rentrent entièrement à l'intérieur du boîtier (7) à une position telle qu'elles se trouvent en saillie par rapport à la bordure extérieure du boîtier, éloignant ainsi les marcs collés au filtre.

9. Filtre pour appareils de vinification selon les revendications n° 2 à 8, **caractérisé par le fait que** lesdits dispositifs chargés d'entraîner la rotation dudit arbre (10) sont constitués d'un moteur pneumatique (13).

10. Appareil de vinification **caractérisé par le fait qu'**il comprend au moins un filtre selon une des revendications précédentes.
